# EUROPÄISCHE PATENTANMELDUNG

(11) **EP 1 475 580 A1**
(43) Veröffentlichungstag der Anmeldung: **10.11.2004**
(21) Anmeldenummer: 04010661.9
(22) Anmeldetag: 05.05.2004
(51) Int. Cl.: F24H 9/20, F23N 5/18, G01F 1/28

(54) **Vorrichtung und Verfahren zur Anpassung der Gebläseleistung eines Heizgerätes oder Lüftungsgerätes an die Geometrie des Abgas- oder Luftsystems**

(30) Priorität: 07.05.2003 DE 10320204
(71) Anmelder: ROBERT BOSCH GMBH, 70442 Stuttgart (DE)
(72) Erfinder: Goesling, Bernulf, 73760 Ostfildern (DE)

(57) **Zusammenfassung**

Die Erfindung betrifft ein Abgas- oder Luftsystem für ein Heizgerät oder Lüftungsgerät mit einem Geblase, welches mit einem Strömungskanal verbunden ist, wobei das Geblase einen drehzahlgeregelten Motor aufweist, der mit einem Steuergerat verbunden ist

Ein besonders robuster und dabei kostengünstiger Aufbau sieht erfindungsgemäß vor, dass der Stromungskanal einen Massestromgeber aufweist, der in Wirkverbindung mit einem Sensor steht, der über eine Signalleitung mit einem Messwertwandler in Verbindung steht, der mittels einer Signalleitung mit dem Steuergerat verbunden ist.

## Beschreibung

Die Erfindung betrifft eine Vorrichtung für die Anpassung eines Abgas- oder Luftsystem für ein Heizgerät oder Lüftungsgerät mit einem Gebläse, welches mit einem Strömungskanal verbunden ist, wobei das Gebläse einen drehzahlgeregelten Motor aufweist, der mit einem Steuergerät verbunden ist.

Die Erfindung betrifft auch ein Verfahren zur Anpassung der Motordrehzahl eines Gebläses an die Druckverluste im Abgas- oder Luftsystem eines Heizgerätes oder Lüftungsgerätes, wobei das Drehzahlsignal des Motors einem Steuergerät über eine Drehzahl-Signalleitung zugeführt wird und die Drehzahl des Motors über eine Stellgrößensignalleitung des Gebläses anhand einer Drehzahlkennlinie von dem Steuergerät vorgegeben wird.

Die Erfindung betrifft weiterhin ein Verfahren zur Erkennung von Betriebszuständen durch Überwachung des Massestromes im Abgas- oder Luftsystem eines Heizgerätes oder Lüftungsgerätes.

### Stand der Technik

In Heizgeräten mit Brennwerttechnik kann der Transport des Abgases nicht mehr durch den natürlichen Auftrieb des Abgases erfolgen, da die Temperatur des Abgases zu gering ist. Gemäß dem Stand der Technik werden daher bei Brennwert-Heizgeräten Gebläse mit stufenlos einstellbarer und geregelter Drehzahl eingesetzt. Die Abgasleitungen können stark unterschiedliche Geometrie aufweisen. So können einerseits kurze Leitungen von beispielsweise 0,5 m Länge eingesetzt werden, andererseits die Leitungen aber bis 10 m lang sein und zudem einen kleinen Querschnitt aufweisen. Die daraus folgenden unterschiedlichen Strömungswiderstände der Abgasleitungen wirken sich trotz der Drehzahlregelung des Gebläses auf die geförderte Luft- und Abgasmenge aus. Da die Brennerleistung direkt proportional der Luftmenge ist, resultieren daraus sehr unterschiedliche Geräteleistungen. Bei einer geringen Geräteleistung ist insbesondere der Komfort im Brauchwasserbetrieb eingeschränkt.

Bei der Aufstellung der Heizungsanlage muss diese daher zur Erreichung einer ausreichenden Geräteleistung auf den Strömungswiderstand im Abgasrohr eingestellt werden. Der Massestrom im Abgassystem wird hierzu beispielsweise mittels des Differenzdruckes an einer Engstelle im Strömungsweg gemessen. Ein Differenzdruckschalter dient dann zur Einstellung der Drehzahl des Gebläses auf den gewünschten Wert.

Alternativ kann eine Strömungsmesseinrichtung mit einem beheizten temperaturabhängigen elektrischen Widerstand eingesetzt werden. Zu deren korrekter Funktion muss die Temperatur des Abgases durch einen zweiten temperaturabhängigen elektrischen Widerstand gemessen werden.

Ähnliche Probleme ergeben sich bei Lüftungsgeräten, wenn die Luftkanäle unterschiedliche Geometrien aufweisen. Auch hier ist in manchen Fällen eine Anpassung an das Luftsystem erforderlich.

Es ist Aufgabe der Erfindung, eine Einrichtung bereitzustellen, mit dem die Luft- oder Abgasmenge eines Lüftungsgerätes oder einer Heizungsanlage einfach und kostengünstig auf die Geometrie des Strömungskanals eingestellt werden kann.

Es ist auch Aufgabe der Erfindung, hierzu ein Verfahren bereitzustellen.

### Vorteile der Erfindung

Die die Vorrichtung betreffende Aufgabe wird dadurch gelöst, dass der Strömungskanal einen Massestromgeber aufweist, der in Wirkverbindung mit einem Sensor steht, der über eine Signalleitung mit einem Messwertwandler in Verbindung steht, der mittels einer Signalleitung mit dem Steuergerät verbunden ist. Hierdurch wird eine einfache, robuste und kostengünstige Einstellung des Massestromes erreicht. Insbesondere ist diese Methode nicht von der Temperatur des Abgases abhängig und weist daher eine höhere Genauigkeit auf.

Eine besonders einfache und gleichzeitig robuste Ausführung sieht vor, dass der Massestromgeber als dauerelastisches Federelement, vorzugsweise aus Federstahl, ausgebildet ist, welches mittels eines Abstandhalters im Strömungskanal in Richtung der Luftströmung hinter dem Gebläse angeordnet ist.

Wird an dem Federelement ein Dauermagnet angeordnet, der in Wirkverbindung mit einem als Magnetfeldsensor ausgebildeten Sensor steht, kann der Massestromgeber einfach an die elektrische Steuerung des Heizgerätes integriert werden.

Eine alternative Ausführungsform sieht vor, dass der Sensor ein optisch oder kapazitiv arbeitender Fühler ist.

Wird der Messwertwandler als Schwellwertschalter und / oder als Signalverstärker ausgelegt und vorzugsweise als integraler Bestandteil des Steuergerätes vorgesehen, ist der Gesamtaufbau besonders einfach und kostengünstig.

Die das Verfahren betreffende Aufgabe wird dadurch gelöst, dass die vom Massestrom abhängige Position eines Massestromgebers von einem Sensor detektiert wird und das Signal des Sensors über eine Signalleitung einem Messwertwandler zugeführt wird und dessen Ausgangssignal dem Steuergerät über eine Signalleitung zugeführt wird. Hierdurch wird ein einfacher Regelkreis realisiert und eine robuste verschleißarme Funktion erreicht.

Ein besonders großer Bereich der Anpassung an das Abgas- bzw. Luftsystem unterschiedlicher Länge und unterschiedlichen Durchmessers wird erzielt, indem die im Steuergerät hinterlegte Drehzahlkennlinie abhängig von der Position des Massestromgebers angepasst wird.

Wird in einem Kalibrierungsmodus die Drehzahl des Motors von einem Minimalwert beginnend gesteigert und diese vom Steuergerät ständig gemessen und, sobald das Signal des Sensors einen vordefinierten Wert erreicht hat, abgespeichert, wobei die Differenz zwischen einem vorgegebenen Sollwert und der abgespeicherten Ist-Drehzahl gebildet und daraus eine neue Drehzahlkennlinie ermittelt wird, kann das Heizgerät bzw. das Lüftungsgerät besonders schnell und präzise auf die jeweils vorliegende Geometrie des Abgas- bzw. Luftsystems angepasst werden.

Die weitere das Verfahren betreffende Aufgabe wird dadurch gelöst, dass die Position des Massestromgebers kontinuierlich ermittelt und das analoge Ausgangssignal des Messwertwandlers ausgewertet wird. Hierdurch kann der Strömungszustand des Abgases ständig überwacht werden und unerwünschte Zustände, wie beispielsweise Brennerschwingungen können frühzeitig erkannt werden.

In bevorzugter Ausführungsform geschieht die Auswertung des Ausgangssignals des Messwertwandlers innerhalb des Steuergerätes, was zusätzliche Elektronik-Komponenten überflüssig macht und Kosten spart.

### Zeichnungen

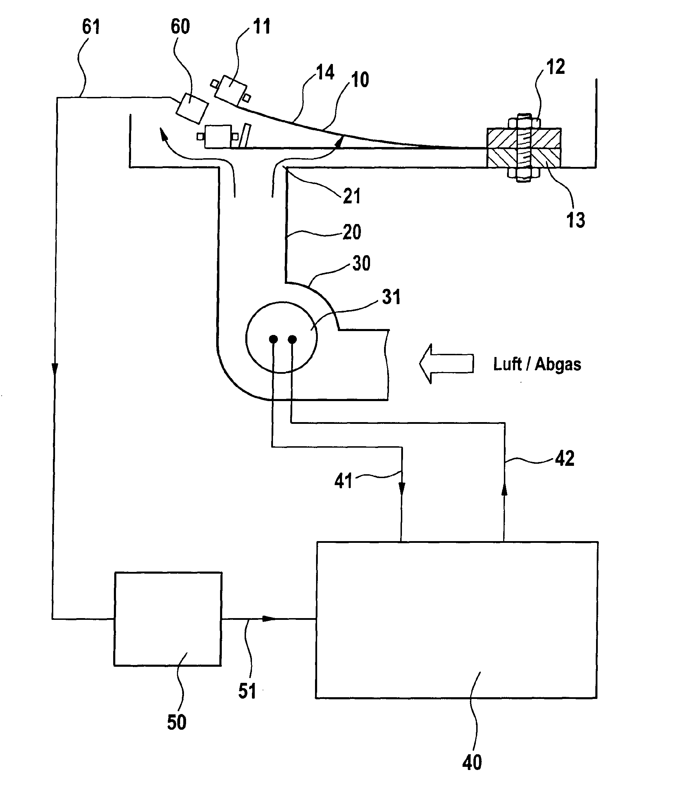

Die Erfindung wird im folgenden anhand eines in der Figur dargestellten Ausführungsbeispiels näher erläutert.

### Ausführungsbeispiel

Die Figur zeigt in schematischer Darstellung eine Vorrichtung zur Anpassung der Gebläseleistung an die Abgasrohrlänge eines Heizgerätes.

Das Heizgerät weist ein Gebläse 30 auf, welches mit einem Strömungskanal 20 verbunden ist, der ein Teil eines Abgassystems des Heizgerätes darstellt. Das Gebläse 30 besitzt in diesem Ausführungsbeispiel einen drehzahlgeregelten Motor 31, der mittels einer Drehzahl-Signalleitung 41 und einer Stellgrößen-Signalleitung 42 mit einem Steuergerät 40 elektrisch verbunden ist.

Am Ende weist der Strömungskanal 20 einen Massestromgeber 10 auf, der als dauerelastisches Federelement 14 ausgebildet ist, welches mittels eines Abstandhalters 13 und einer als Schraubverbindung ausgeführten Befestigung 12 in Richtung der Abgasströmung hinter dem Abgasaustritt des Strömungskanals 20 montiert ist.

Das Federelement 14 wird durch den Impuls des vorbeiströmenden Abgases in Strömungsrichtung ausgelenkt, wodurch sich ein vom Auslenkungswinkel abhängiger Austrittsquerschnitt 21 einstellt. Die Auslenkung nimmt mit steigendem Massestrom zu und kann daher als Messgröße für den Massestrom verwendet werden.

In einem anderen Ausführungsbeispiel kann der Strömungskanal 20 auch Teil eines Luftsystems eines Lüftungsgerätes sein.

Der Massestromgeber 10 steht in Wirkverbindung mit einem Sensor 60, der über eine Signalleitung 61 mit einem Messwertwandler 50 verbunden ist, der wiederum mittels einer Signalleitung 51 mit dem Steuergerät 40 verbunden ist.

Im gezeigten Beispiel ist die Wirkverbindung zwischen dem Massestromgeber 10 und dem Sensor 60 derart ausgebildet, dass das Federelement 14, welches vorzugsweise aus Blech, Federstahl oder, abhängig von der dort auftretenden Temperatur, auch aus Kunststoff ausgeführt sein kann, an seinem beweglichen Ende einen Dauermagneten 11 aufweist. In unmittelbarer Nähe des Dauermagneten 11 ist der als Magnetfeldsensor (Hall-Sensor) ausgebildete Sensor 60 angebracht, der seinen elektrischen Widerstand in Abhängigkeit von der Richtung und Stärke des Magnetfeldes ändert und somit die Auslenkung des Massestromgebers 10 detektieren kann.

Das Ausgangssignal des Sensors 60 wird über die Signalleitung 61 dem Messwertwandler 50 zugeführt, der als Schwellwertschalter und / oder als Signalverstärker ausgelegt und vorzugsweise integraler Bestandteil des Steuergerätes 40 sein kann.

Denkbar ist auch eine Integration des Messwertwandlers 50 innerhalb des Sensors 60, was zur Folge haben kann, dass das Ausgangssignal des Sensors 60 bereits als normiertes bzw. standardisiertes Signal aufbereitet ist, was insbesondere bei längeren Signalleitungen zum Steuergerät 40 vorteilhaft sein kann.

Die Wirkverbindung zwischen Massestromgeber 10 und Sensor 60 kann vorzugsweise auch derart ausgebildet sein, dass die Bestimmung der Auslenkung des Massestromgebers 10 mittels berührungslos arbeitender kapazitiver oder optischer Fühler erfolgt. Im Falle eines kapazitiv arbeitenden Sensors 60 wird beispielsweise ein elektrisches Wechselfeld erzeugt, wobei die Änderung des Abstandes zwischen Massestromgeber 10 und Sensor 60 eine Änderung der Kapazität zur Folge hat, welche über entsprechende elektronische Schaltungen ausgewertet werden kann. Im Falle eines optischen Sensors 60 kann beispielsweise eine Lichtschranke ausgebildet sein, die bei genügend großer Auslenkung des Massestromgebers 10 zumindest teilweise unterbrochen wird und eine Signaländerung zur Folge hat.

Als Wirkverbindung denkbar sind auch mechanische Schalter, beispielsweise Mikroschalter, die bei entsprechender Auslenkung des Massestromgebers betätigt werden.

Das Verfahren zur Anpassung der Motordrehzahl des Gebläses 30 an die Druckverluste im Abgas- oder Luftsystem erfolgt beispielsweise mit der oben beschriebenen Vorrichtung, in dem die vom Massestrom abhängige Position des Massestromgebers 10 mit dem Sensor detektiert wird und das Signal des Sensors 60 mittels des Messwertwandlers 50 verstärkt und dabei ggf. normiert bzw. standardisiert wird und anschließend dem Steuergerät 40 zur Weiterverarbeitung zugeführt wird. Dabei kann die im Steuergerät 40 hinterlegte Drehzahlkennlinie abhängig von der Position des Massestromgebers 10 angepasst werden.

Bei Erstinbetriebnahme des Heizgerätes oder zur routinemäßigen Überprüfung während des Betriebs wird in einem Kalibriermodus zunächst die Drehzahl des Motors 31 von einem Minimalwert beginnend in bestimmten Stufen oder kontinuierlich gesteigert und dabei die Drehzahl vom Steuergerät 40 ständig gemessen. Sobald der Massestromgeber 10 eine definierte Auslenkung erreicht hat, was - abhängig von den Materialdaten und der Dicke des Federelementes 14 sowie der Höhe des Abstandhalters 13 - einem bestimmtes Massestrom entspricht, wird im Sensor 60 ein vordefinierter Wert für das Sensorsignal erreicht und über den Messwertwandler 50 ein entsprechendes Signal an das Steuergerät 40 weitergeleitet. In diesem Moment wird die inzwischen erreichte Drehzahl gespeichert und die Differenz zwischen einem vorgegebenen Sollwert und der abgespeicherten Ist-Drehzahl gebildet. Aus dieser Differenz kann über eine rechnerische Verknüpfung eine neue Drehzahlkennlinie ermittelt werden, die dann die geometrischen Verhältnisse, insbesondere die Rohrlänge und den Rohrquerschnitt des Abgas- bzw. des Luftsystems berücksichtigt.

In einem Ausführungsbeispiel ist der Sensor 60 derart angebracht, dass in einer definierten Position des Dauermagneten 11, was einer bestimmten Auslenkung des Massestromgebers 10 und damit einem bestimmten Massestrom entspricht, das Ausgangssignal des Sensors 60 genau den Wert Null erreicht.

Ein weiteres Verfahren dient zur Erkennung von Betriebszuständen durch Überwachung der Druckverluste im Abgas- oder Luftsystem eines Heizgerätes oder Lüftungsgerätes.

Bei diesem Ausführungsbeispiel wird mittels der oben beschriebenen Vorrichtung die Position des Massestromgebers 10 mit dem Sensor 60 detektiert, wobei das analoge Ausgangssignal des als Signalverstärker arbeitenden Messwertwandlers 50 ausgewertet wird. Dies geschieht vorzugsweise innerhalb des Steuergerätes 40. Damit kann, zu mindestens annähernd, der Strömungszustand des Abgases bzw. der Luft überwacht und unerwünschte Zustände, beispielsweise Brennerschwingungen, bei denen die Strömung starken Schwankungen unterliegt, frühzeitig erkannt werden.

Zusammenfassend lassen sich auf Basis der beschriebenen Vorrichtungsvarianten einfach und kostengünstig Anpassungen an das Abgas- oder Luftsystem von Heizgeräten oder Lüftungsgeräten realisieren. Gleichzeitig kann damit noch eine einfache Strömungsüberwachung erreicht werden, ohne dass zusätzliche Komponenten erforderlich sind.

## Patentansprüche

1. Abgas- oder Luftsystem für ein Heizgerät oder Lüftungsgerät mit einem Gebläse (30), welches mit einem Strömungskanal (20) verbunden ist, wobei das Gebläse (30) einen drehzahlgeregelten Motor (31) aufweist, der mit einem Steuergerät (40) verbunden ist,
**dadurch gekennzeichnet,**
**dass** der Strömungskanal (20) einen Massestromgeber (10) aufweist, der in Wirkverbindung mit einem Sensor (60) steht, der über eine Signalleitung (61) mit einem Messwertwandler (50) in Verbindung steht, der mittels einer Signalleitung (51) mit dem Steuergerät (40) verbunden ist.

2. Vorrichtung nach Anspruch 1,
**dadurch gekennzeichnet,**
**dass** der Massestromgeber (10) als dauerelastisches Federelement (14), vorzugsweise aus Federstahl, ausgebildet ist, welches mittels eines Abstandhalters (13) hinter dem Strömungskanal (20) in Richtung der Abgas- oder Luftströmung angeordnet ist.

3. Vorrichtung nach Anspruch 1 oder 2,
**dadurch gekennzeichnet,**
**dass** an dem Federelement (14) ein Dauermagnet (11) angeordnet ist, der in Wirkverbindung mit dem als Magnetfeldsensor ausgebildeten Sensor (60) steht.

4. Vorrichtung nach einem der Ansprüche 1 bis 2,
**dadurch gekennzeichnet,**
**dass** der Sensor (60) ein optisch oder kapazitiv arbeitender Fühler ist.

5. Vorrichtung nach mindestens einem der Ansprüche 1 bis 4,
**dadurch gekennzeichnet,**
**dass** der Messwertwandler (50) als Schwellwertschalter und / oder als Signalverstärker ausgelegt ist und vorzugsweise integraler Bestandteil des Steuergerätes (40) ist.

6. Verfahren zur Anpassung der Motordrehzahl eines Gebläses (30) an Druckverluste im Abgas- oder Luftsystem eines Heizgerätes oder eines Lüftungsgerätes, wobei das Drehzahlsignal des Motors (31) einem Steuergerät (40) zugeführt wird und die Drehzahl des Motors (31) anhand einer Drehzahlkennlinie von dem Steuergerät (40) vorgegeben wird,
**dadurch gekennzeichnet,**
**dass** die vom Massestrom abhängige Position eines Massestromgebers (10) von einem Sensor (60) detektiert wird und das Signal des Sensors (60) über eine Signalleitung (61) einem Messwertwandler (50) zugeführt wird und dessen Ausgangssignal dem Steuergerät (40) über eine Signalleitung (51) zur Weiterverarbeitung zugeführt wird.

7. Verfahren nach Anspruch 6,
**dadurch gekennzeichnet,**
**dass** die im Steuergerät (40) hinterlegte Drehzahlkennlinie abhängig von der Position des Massestromgebers (10) angepasst wird.

8. Verfahren nach einem der Ansprüche 6 bis 7,
**dadurch gekennzeichnet,**
**dass** in einem Kalibrierungsmodus die Drehzahl des Motors (31) von einem Minimalwert beginnend gesteigert und diese vom Steuergerät (40) ständig gemessen und, sobald das Signal des Sensors (60) einen vordefinierten Wert erreicht hat, abgespeichert wird, wobei die Differenz zwischen einem vorgegebenen Sollwert und der abgespeicherten Ist-Drehzahl gebildet und daraus eine neue Drehzahlkennlinie ermittelt wird.

9. Verfahren zur Erkennung von Betriebszuständen durch Überwachung des Massestromes im Abgas- oder Luftsystem eines Heizgerätes oder
Lüftungsgerätes,
**dadurch gekennzeichnet,**
**dass** die vom Massestrom abhängige Position eines Massestromgebers (10) von einem Sensor (60) detektiert wird und das Signal des Sensors (60) über eine Signalleitung (61) einem Messwertwandler (50) zugeführt wird und dessen analoges Ausgangssignal ausgewertet wird.

10. Verfahren nach Anspruch 9,
**dadurch gekennzeichnet,**
**dass** das Ausgangssignal des Messwertwandlers (50) dem Steuergerät (40) zugeführt wird und dort ausgewertet wird.
